Europäisches Patentamt

European Patent Office

Office européen des brevets

(11) Veröffentlichungsnummer: **0 100 959**
**B1**

(12) **EUROPÄISCHE PATENTSCHRIFT**

(45) Veröffentlichungstag der Patentschrift:
30.04.86

(21) Anmeldenummer: 83107361.4

(22) Anmeldetag: 27.07.83

(51) Int. Cl.⁴: **G 09 B 23/32**

(54) **Gliederfigur.**

(30) Priorität: **14.08.82 DE 3230284**

(43) Veröffentlichungstag der Anmeldung:
**22.02.84 Patentblatt 84/8**

(45) Bekanntmachung des Hinweises auf die Patenterteilung:
**30.04.86 Patentblatt 86/18**

(84) Benannte Vertragsstaaten:
**FR GB IT**

(56) Entgegenhaltungen:
**DE - A - 2 201 257**
**DE - A - 2 207 796**
**US - A - 1 882 575**

(73) Patentinhaber: **Schild, Otto, Herdweg 48,**
**D-7000 Stuttgart 1 (DE)**

(72) Erfinder: **Schild, Otto, Herdweg 48,**
**D-7000 Stuttgart 1 (DE)**

(74) Vertreter: **Jackisch, Walter, Dipl.-Ing., Menzelstrasse 40,**
**D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Gliederfigur nach dem Oberbegriff des Anspruches 1.

Solche Gliederfiguren werden von Schülern, Künstlern, Hobbymalern und -bildhauern, von Ingenieuren und Innenarchitekten sowie von Designern als Modell zum Zeichnen bzw. zum Erarbeiten ergonomischer Beziehungen von Büromaschinen und -einrichtungen oder dergleichen verwendet. Aus der DE-OS 22 01 257 ist eine Gliederfigur der gattungsbildenden Art bekannt, bei der die Gelenkstücke durch Kugeln ausgebildet sind, deren Mittelpunkt den Drehpunkt der Gelenke bildet. Dadurch sind mit diesen Gelenken lediglich Drehbewegungen um diesen einen Drehpunkt möglich, so daß mit einer solchen Gliederfigur menschliche Bewegungen nicht annähernd zutreffend wiedergegeben werden können. Diese Gliederfiguren sind daher für exakte wissenschaftliche Berechnungen völlig unbrauchbar. Daher werden für solche Zwecke Schablonen benutzt, die den Maßstäben der Zeichnungen entsprechen.

Aus der DE-OS 22 07 796 ist eine Gliederfigur bekannt, bei der die Gliederteile über Stifte und Stifte mit Flanschen miteinander gelenkig verbunden sind, wobei die Gliederteile um die Achsen der Stifte drehbar sind. Da auch bei dieser bekannten Gliederfigur nur Drehbewegungen der Gliederteile um die Achse möglich sind, können menschliche Bewegungen nur unzutreffend kopiert werden.

Der Erfindung liegt die Aufgabe zugrunde, eine Gliederfigur der gattungsbildenden Art so auszubilden, daß mit ihr im wesentlichen alle Stellungen und Haltungen des menschlichen Körpers weitgehend naturgetreu dargestellt werden können.

Diese Aufgabe wird bei einer Gliederfigur der gattungsbildenden Art mit den kennzeichnenden Merkmalen des Anspruches 1 gelöst.

Infolge der erfindungsgemäßen Ausbildung sind zwischen den einander zugeordneten Gliedteilen jeweils zwei Gelenkstellen gebildet, so daß jeweils beide Gelenkteile unabhängig voneinander gegenüber dem Gelenkstück verschwenkt werden können. Durch die beiden Gelenkstellen und die beiden Schwenkpunkte jedes Gelenkes sind die zugehörigen Gliedteile um eine wesentlich größere Zahl von Dreh- und Schwenkachsen beweglich, so daß die Gliedteile ohne weiteres in nahezu alle Stellungen gebracht werden können, die auch der menschliche Körper einnehmen kann.

Dadurch eignet sich die erfindungsgemäße Gliederfigur nicht nur hervorragend als Zeichenmodell für Künstler, sondern auch als Modell zur Ermittlung ergonomischer Beziehungen für wissenschaftliche Zwecke.

Weitere Vorteile der Erfindung ergeben sich aus den weiteren Ansprüchen, der nachfolgenden Beschreibung und den Zeichnungen.

Die Erfindung wird anhand eines in den Zeichnungen dargestellten Ausführungsbeispiels näher beschrieben. Es zeigt:

Fig. 1 eine erfindungsgemäße Gliederfigur in Vorderansicht,

Fig. 2 die Gliederfigur nach Fig. 1 in Rückansicht,

Fig. 3 und 4 in vergrößerter Darstellung einen Teil der erfindungsgemäßen Gliederfigur nach Fig. 1 mit dem Kopf, dem Halsstück und dem Brustkorb im Längsschnitt und in Seitenansicht, jeweils in verschiedenen Stellungen.

Fig. 5 das Halsstück nach den Fig. 3 und 4 in Draufsicht,

Fig. 6 und 7 eine zweite Ausführungsform eines Halsstückes in Ansicht,

Fig. 8 bis 10 den in den Fig. 3 und 4 dargestellten Teil der Gliederfigur nach Fig. 1 von hinten und im Längsschnitt,

Fig. 11 in vergrößerter Darstellung einen weiteren Teil der Gliederfigur nach Fig. 1 mit dem Brustkorb, den Armen, dem Bauch, dem Rumpf und den Beinen, im Längsschnitt,

Fig. 12 den Teil der Gliederfigur nach Fig. 11 in Seitenansicht,

Fig. 13 und 14 in vergrößerter Darstellung die mit dem Unterarm verbundene Hand in Draufsicht auf die Handfläche und in Seitenansicht und teilweise im Längsschnitt,

Fig. 15 einen Schnitt längs der Linie XV-XV in Fig 13,

Fig. 16 einen auf einem plattenartigen Träger befestigten Fuß der Gliederfigur nach Fig. 1 in Seitenansicht

Fig. 17 eine Draufsicht auf den Träger nach Fig. 16 und

Fig. 18 bis 21 eine zweite und dritte Ausführungsform einer erfindungsgemäßen Gliederfigur in Darstellungen entsprechend den Fig. 11 und 12.

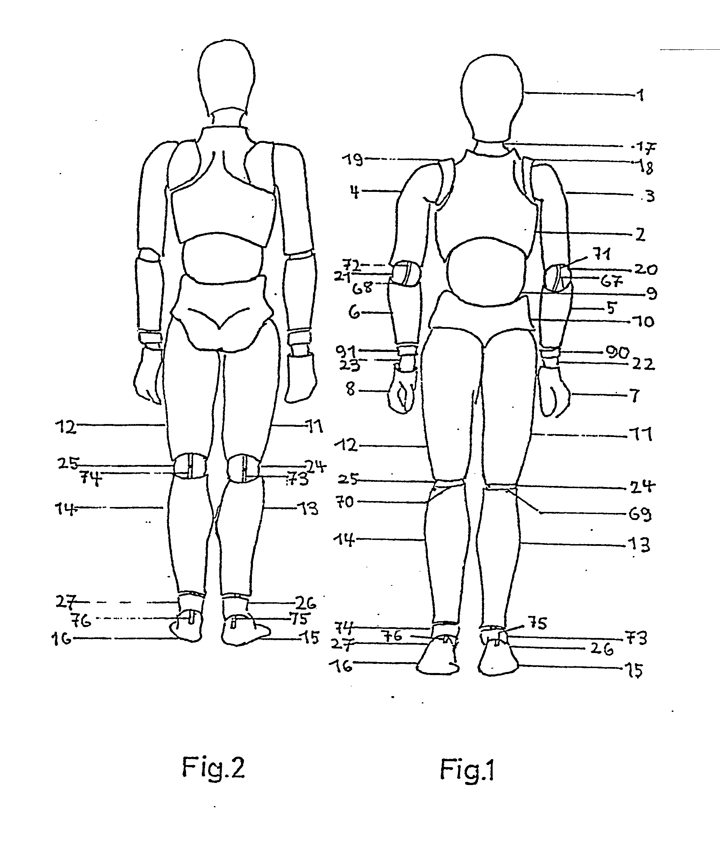

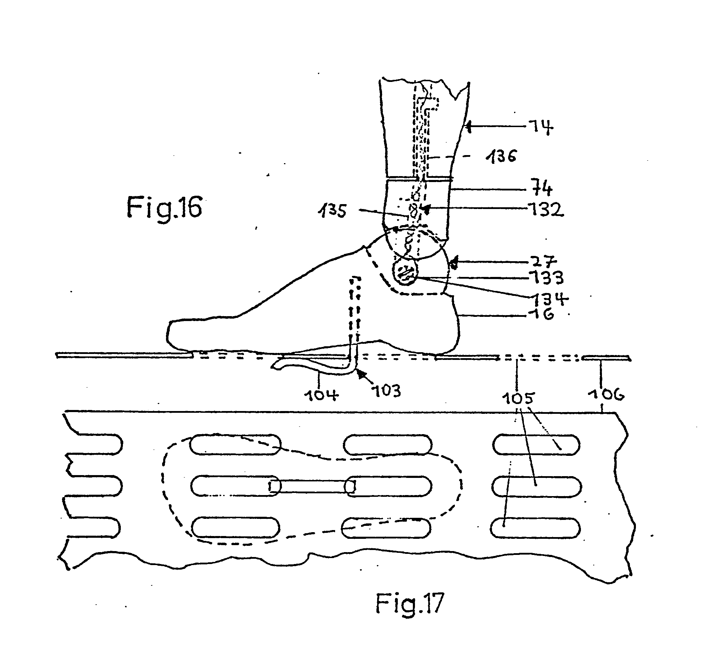

Die männliche Gliederfigur nach den Fig. 1 bis 16 ist einem menschlichen Körper im Maßstab 1:5 maß- und proportionsgerecht nachgebildet, wobei alle Gliedteile weitgehend die Form entsprechender menschlicher Gliedteile haben. Diese Gliederfigur kann mit Modellen, wie Möbeln, Autos u.dgl., beispielsweise für ergonomische Ermittlungen in genaue Beziehung gebracht werden, die in entsprechendem Maßstab dargestellt sind. Die Gliederfigur kann aber auch in beliebig anderen Größen mit einem anderen Maßstabsverhältnis und auch als weibliche Figur ausgebildet sein. Sie kann beispielsweise aus Metall, Holz, Kunststoff hergestellt sein und kann auf einem plattenartigen Träger (Fig. 16, 17) in jeder gewünschten Stellung standfest aufgestellt werden.

Solche Gliederfiguren werden meist von Künstlern, Hobbymalern, -bildhauern und Schülern als Ersatz für ein menschliches Modell verwendet. Sie eignet sich aber auch für Dekorationszwecke und zur Demonstration von Bewegungsahläufen für Phasenzeichner oder auch als Spielzeug für Kinder.

Wie die Fig. 1 und 2 zeigen, sind die einzelnen Gliedteile, wie Kopf 1 und Brustkorb 2, Oberarme

2

3 und 4 und Unterarme 5 und 6, Unterarme und Hände 7 und 8, Brustkorb und Bauch und Bauch und Becken 10 sowie das Becken und die Oberschenkel 11 und 12 und Oberschenkel und Unterschenkel 13 und 14 und Unterschenkel und Füße 15 und 16 jeweils über Gelenkstücke 17 bis 27 gelenkig miteinander verbunden.

Zwischen dem Kopf 1 und und dem Brustkorb 2 bildet ein Hals 17 und zwischen dem Brustkorb 2 und den Oberarmen 3 und 4 ein Schulterblatt 18 und 19 das jeweilige Gelenkstück, während der Bauch 9 und Becken 10 Gelenkstücke zwischen Brustkorb und Becken bzw. zwischen Bauch und Oberschenkeln bilden.

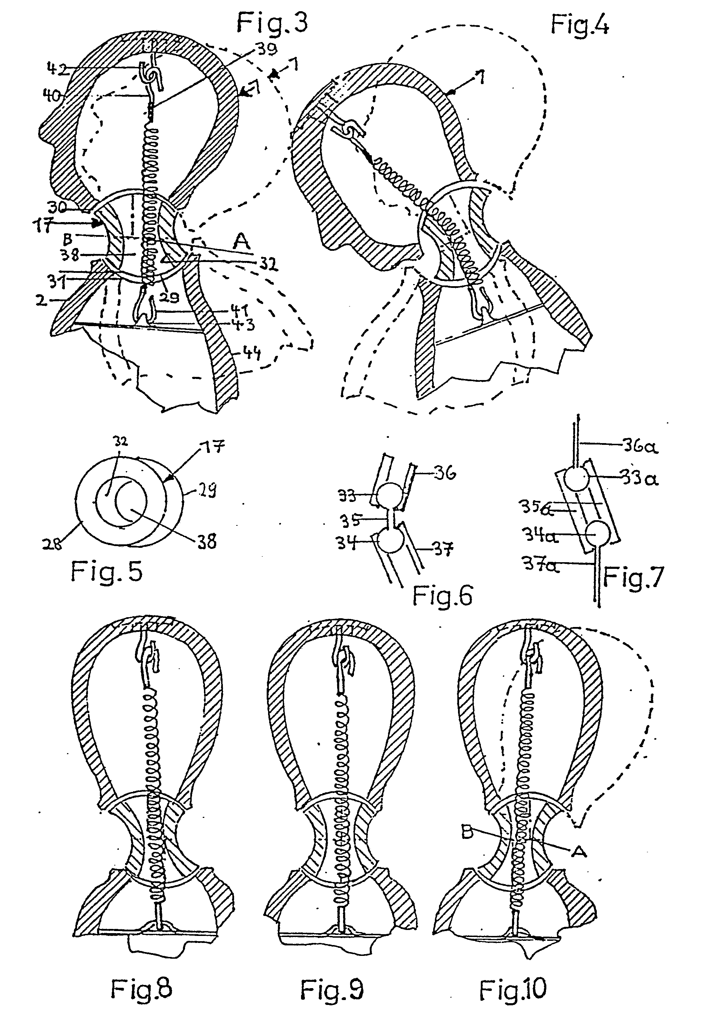

Wie insbesondere die Fig. 3 bis 5 zeigen, ist der Hals 17 ringförmig ausgebildet und hat einen oberen und unteren in Axialschnitt teilkreisförmig konvex gekrümmten Ringrand 28 und 29, die jeweils eine Gelenkfläche bilden, mit denen der Hals formschlüssig in einer entsprechend gekrümmten Gelenkfläche einer konkaven Vertiefung 30 und 31 des Kopfes 1 bzw. des Brustkorbes 2 liegt.

Die beiden Gelenkflächen 28 und 29 des Halses 17 erstrecken sich etwa über einen Viertelkreis und haben etwa gleichen Krümmungsradius. Die Krümmungsmittelpunkte A, B der Gelenkflächen liegen zwar in einer gemeinsamen Quermittelebene des Halses 17; sie fallen aber nicht zusammen, sondern sind jeweils um wenige Millimeter seitlich gegenüber der Längsmittelebene des Halses versetzt. Dadurch kann der Kopf 1 nicht nur gegenüber dem Hals 17 nach allen Seiten gedreht, sondern kann auch seitlich gegenüber dem Brustkorb 2 horizontal versetzt werden (Fig. 8, 10). Hierbei liegt der Hals 17 mit seinen beiden Gelenkflächen 28 und 29 formschlüssig in den beiden Vertiefungen 30 und 31 des Kopfes 1 und des Brustkorbes 2. Dagegen ragt die obere hzw. untere lenkfläche 2S, 29 des Halses 17 über die Vertiefungen des Kopfes und des Brustkorbes, wenn der Kopf 1 senkrecht über dem Brustkorb 2 steht und gerade nach vorne gerichtet ist.

Wie in den Fig. 3 und 4 mit gestrichelten Linien angedeutet ist, könne der Kopf 1 und der Brustkorb 2 gleichzeitig beim Drehen bis zur gegenseitigen Berührung auf einander zu oder voneinander weg bewegt werden, wobei sie um die Krümmungsmittelpunkte A, B der Gelenkflächen 28 und 29 des Halses 17 schwenken. Um diese Bewegung zu ermöglichen, ist eine Ringwand 32 des Halses 17 teilkreisförmig konkav nach innen gekrümmt, so daß die Vertiefungen 30 und 31 des Kopfes 1 und des Brustkorbes 2 beim Verschwenken dieser Gliedteile nicht am Hals 17 anstoßen.

Anstelle des ringförmigen Halses 17 kann auch ein Halsstück verwendet werden, das durch zwei übereinander angeordnete und miteinander verbundene Kugeln 33, 34 bzw. 33a, 34a gebildet ist. (Fig. 6, 7) Die Kugeln sind durch einen Verbindungssteg 35 oder durch einander gegenüberliegende Verbindungsplatten oder ein rahmenartiges Verbindungsteil 35a miteinander verbunden. Die Kugeln 33 und 34 sind in etwa U-förmigen Haltestücken 36 und 37 angeordnet (Fig. 6), die mit dem Kopf 1 bzw. dem Brustkorb 2 verbunden oder einstückig mit diesem ausgebildet sein können. Die Kugeln 33a und 34a nach Fig. 7 sind an Stangen 36a und 37a angeordnet, die im Kopf bzw. im Brustkorb befestigt werden müssen.

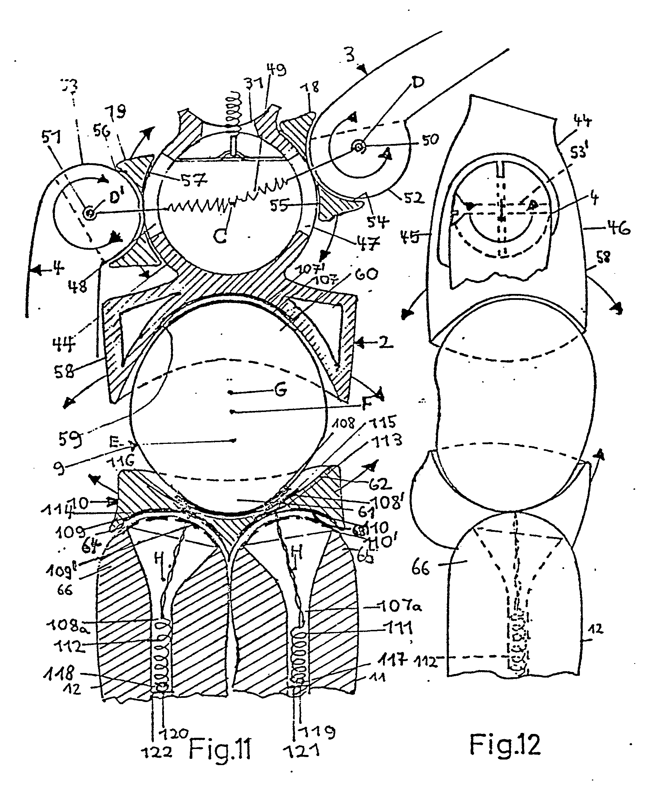

Durch eine Ringöffnung 38 des Halses 17 ist eine Zugfeder 39 geführt, die durch eine Öffnung des hohl ausgebildeten Kopfes 1 und auf der gegenüberliegenden Seite durch eine Öffnung des Brustkorbes 2 ragt und mit beispielsweise hakenförmigen Enden 40 und 41 in einem Baken bzw einer Öse 42 bzw. 43 eingehängt ist. Diese sind an der Innenseite des Kopfes und des Brustkorbes befestigt sind. Die Öse 43 ist in einem hohlen Brustteil 44 des Brustkorbes 2 befestigt, das im Axialschnitt nach Fig.11 kreisförmigen Querschnitt hat und in Seitenansicht den Rücken und die Brust bildende leicht nach außen gewölbte Außenflächen 45 und 46 hat.

Das Brustteil 44 weist unterhalb seiner Vertiefung 31 diametral einander gegenüberliegende kreisförmige Öffnungen 47 und 48 auf, durch die eine weitere, das Brustteil 44 durchsetzende Zugfeder 49 nach außen bis zu den Oberarmen 3 und 4 geführt ist. Die Feder 49 weist hakenförmige Enden 50 und 51 auf, die an kalottenförmigen Enden 52 und 53 der Oberarme 3 und 4 und dort in schraubanartigen Halteteilen 53' (Fig. 12) eingehängt sind. Die Außenflächen der Enden 52 und 53 und die Ränder der Öffnungen 47 und 48 des Brustteiles 44 bilden jeweils eine Gelenkfläche für eine entsprechend gekrümmte Gelenkfläche 54 bis 57 des zugehörigen ringförmigen Gelenkstückes 18, 19 der Armgelenke.

Die Gelenkflächen 54 bis 57 der Gelenkstücke 18, 19 sind etwa viertelkreisförmig konkav gekrümmt, wobei die den Enden 52 und 53 der Arme 3, 4 zugeordneten Gelenkflächen 54, 56 geringfügig größeren Krümmungsradius als die anderen Gelenkflächen 55, 57 haben. Dadurch weisen die Gelenkstücke 18, 19 wiederum zwei Krümmungsmittelpunkte D, D' auf, um die sie gegenüber den Oberarmen 3, 4 bzw. dem Brustteil 44 verschwenkbar sind. Die Oberarme 3, 4 können gleichzeitig beim Drehen angehoben bzw. gesenkt werden, wobei sich die Gelenkstücke 18, 19 entsprechend mitbewegen. Da die Gelenkstücke 18, 19 funktionell den Schulterblättern des menschlichen Körpers entsprecken, können mit der beschriebenen Armgelenkausbildung weitgehend alle Beweglichkeiten des Schultergürtels beim Heben bzw. Senken und nach vorne und hinten Führen der Oberarme 3, 4 nachvollzogen werden.

An den Brustteil 44 des Brustkorbes 2 schließt ein unterer Brustkorbabschnitt 58 an, dessen etwa ovaler Umriß weitgehend der Form des menschlichen Brustkorbes angepaßt ist. Dieser Brustkorbabschnitt 58 hat gemäß Fig. 10 größere Breite als der Brustteil 44. Dieser erstreckt sich bis über die Gelenkstücke 18, 19. Die Außenflächen 45 und 46 des Brustteiles 44 bilden auch die Außenflächen dieses Brustkorbabschnittes 58. Der Brustkorbabschnitt 58 hat eine konkave Vertiefung 59, in die eine größere Hälfte 60 des Bauches 9 ragt. Die Vertiefung 59 hat etwa in halber Höhe des Bauches 9 gegenüber diesem radiales Spiel, so daß der Bauch bzw. der Brustkorb nicht nur gegeneinander verdreht, sondern auch seitlich verschwenkt oder gekippt werden können.

Die kleinere Hälfte 61 des Bauches 9 liegt in einer um den Krümmungsmittelpunkt G mit größerem Krümmungsradius konkav gekrümmten Vertiefung 62 des Beckens 10, so daß der Bauch 9 bzw. das Becken 10 entsprechend wie der Brustkorb 2 in Richtung der in den Fig. 10 und 11 eingezeichneten Pfeile verschwenkt werden können. Das Becken 10 ist als etwa ovale, relativ schmale Scheibe ausgebildet, die auf der der Vertiefung 62 gegenüberliegenden Seite zwei weitere ebenfalls konkave Vertiefungen 63 und 64 aufweist, die jedoch mit wesentlich kleinerem Krümmungsradius um die Krümmungsmittelpunkte H gekrümmt sind. Ihre Außenflächen bilden wie die Außenflächen der Vertiefungen 59 und 62 des Brustkorbes 2 und des Beckens 10 und wie die zugehörigen Außenflächen der großen und kleinen Bauchhälfte 60 und 61 Gelenkflächen. In die Vertiefungen 63 und 64 ragen formschlüssig kalottenförmig abgerundete Enden 65, 66 der Oberschenkel 11, 12. Die Vertiefungen 63, 64 liegen symmetrisch zur Längsmittelhalbierenden des Beckens 10. Ihr Krümmungsradius ist wesentlich kleiner als der der Vertiefung 62. Durch die beschriebene Bau- und Beckenausbildung und deren gelenkige Anordnung zueinander können auch durch diese Gliedteile alle wesentlichen Stellungen der entsprechenden menschlichen Körperteile zueinander dargestellt Werden, wobei der Brustkorb 2 und das Becken 10 um die Krümmungsmittelpunkte E bzw. F der größeren bzw. kleineren Bauchhälfte 60 bzw. 61 drehen oder schwenken.

In den Oberschenkeln 11, 12 sind in Längsrichtung verlaufende Öffnungen 107a, 108a vorgesehen, die sich in einem oberen, an die Enden 65, 66 anschließenden Abschnitt trichterförmig erweitern und jeweils eine Zugfeder 111, 112 aufnehmen. Diese ist mit einem Ende 113, 114 an einer Platte 115, 116 befestigt, die im Becken 10 verankert ist. Mit ihrem anderen, hakenförmigen Ende 117, 118 sind die Zugfedern 111, 112 in einer Öse 119, 120 an einem Boden 121, 122 der Öffnung 107, 108 verankert.

Die Gelenkflächen des Brustkorbes, des Bauches, des Beckens und der Oberschenkelenden sind magnetisch ausgebildet; sie weisen magnetische Einlagen 107, 107', 108, 108', 109, 109' 110, 110', wie Metallplatten, Metallgitter od. dgl., auf. Anstelle oder zusätzlich zu dieser magnetischen Halterung können auch Zugteile, wie die Federn 111, 112, vorgesehen sein, die beispielsweise am Brustkorbabschnitt 58 befestigt und durch den Bauch und das Becken bis zu den Oberschenkelenden geführt sind.

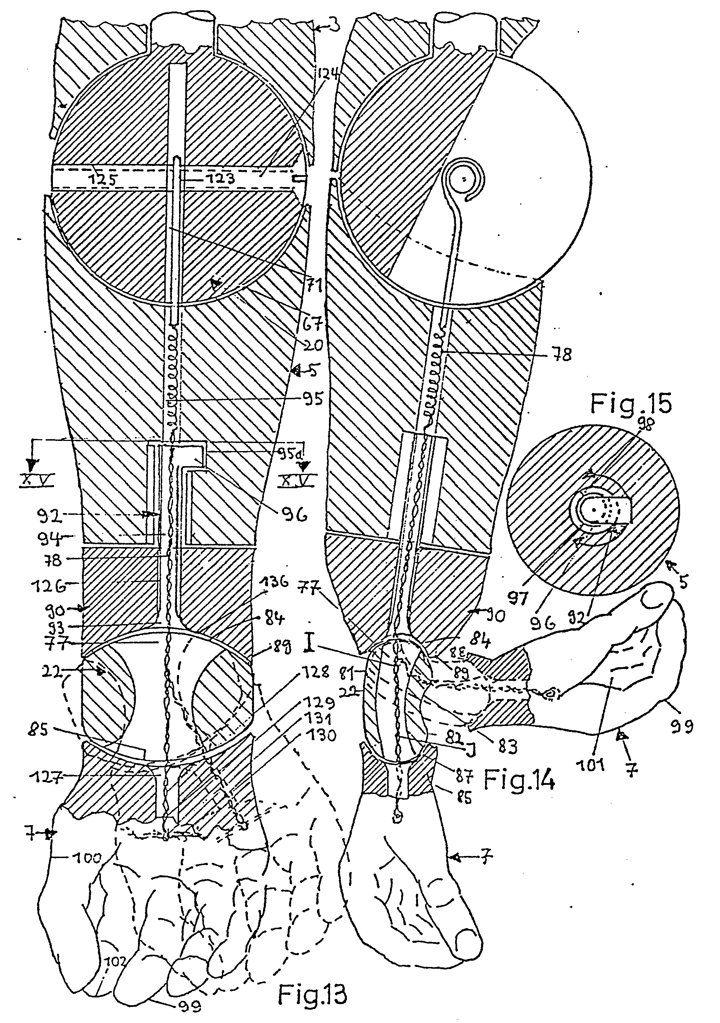

Die Gelenkstücke 20, 21 und 24, 25 der Elnenbogen- und Kniegelenke bestehen in bekannter Weise aus einer Kugel, die mit den zugehörigen Oberarmen 3, 4 bzw. mit den zugehörigen Oberschenkeln 11, 12 verbunden, vorzugsweise verschraubt oder einteilig, ausgebildet sind. Die Zwischenstücke 20, 21 und 24, 25 liegen in einer entsprechend konkav gekrümmten Endfläche 67 bis 70 der Unterarme 5,6 und der Unterschenkel 13, 14. Diese Gelenke sind jeweils als Scharniergelenke ausgebildet, über die die Unterarme und Unterschenkel in zwei Ebenen beweglich sind. Sie können verdreht, gebeugt, gestreckt werden. Die Gelenkstücke 20, 21 und 24, 25 sind in ihren unteren Hälften jeweils mit einem halbkreisförmigen durchgehenden Schlitz 71, 72 und 73, 74 (Fig. 2) versehen, in denen jeweils ein hakenförmiges Ende 123 (Fig. 13) einer Feder 78 in eine Schraube 124 eingehängt ist. Diese ist in eine Bohrung 125 des Gelenkstückes 20 eingeschraubt. Die Feder 78 ragt ferner durch eine Öffnung 95 des Unterarmes 5 und durch mit dieser fluchtende Öffnungen 136, 77, 127 des zugehörigen Endstückes 90, des Gelenkstückes 22 und der Hand 7 bzw. der Unterschenkel. Das untere Federende 128 ist mit einem Haken 129 in einer an einem Boden 130 befestigten Öse 131 eingehängt. Die Kniegelenke sind so ausgebildet, daß die Unterschenkel 13, 14 in ihrer ganz gestreckten Endstellung gegenüber den Oberschenkeln 11, 12 überstreckt werden und um einen Winkel von ca. 150° gebeugt werden können.

Eine Dreh- und Schwenkbewegung zwischen den Unterschenkeln 13, 14 und den Füßen 15, 16 wird durch ein entsprechendes Scharniergelenk erreicht, bei dem die Gelenkstücke 26, 27 durch einstückig mit den Füßen ausgebildete kalottenförmige Ansätze gebildet sind, die die Fußknöchel ersetzen. Die Gelenkstücke 26, 27 ragen in ringförmige Endstücke 73, 74 (Fig. 16) der Unterschenkel 13, 14. Die Ansätze 26, 27 sind derart drehbar an den Unterschenkeln 13, 14 befestigt, daß die Füße 15, 16 um mindestens etwa 35° nach innen und um etwa mindestens 43° nach außen gegenüber den Unterschenkeln gedreht werden können. Zum Verbinden der Füße 15, 16 mit den Unterschenkeln 13, 14 sind die Ansätze 26, 27 hohl ausgebildet und weisen entsprechend den Gelenkstücken 20, 21; 24, 25 Schlitze 75, 76 (Fig. 2) auf, durch die eine Feder 132 geführt ist, die wie die Feder 78 in den Fig. 13, 14 mit ihrem einen Ende 133 an einer Schraube 134 befestigt ist, die die Ansätze 26, 27 durchsetzt und die durch Öffnungen 135, 136 des Endstückes 74 und des Unterschenkels 14 bis an das Gelenkstück 25 des Kniegelenkes reicht. An diesem ist die Feder mit einem Haken in einer zugehörigen Schraube eingehängt, wie dies in den Fig. 13, 14 anhand des Armgelenkes dargestellt ist.

Die Gelenkstücke 22, 23 der Handgelenke haben etwa länglich rechteckigen Umriß (Fig. 13, 14) und weisen die über ihre. ganze Höhe verlaufende Öffnung 77 auf. Die einander zugewandten Innenflächen der Seitenwände der Gelenkstücke 22, 23 sind jeweils teilkreisförmig konvex nach innen gekrümmt, wobei die an den Schmalseiten liegenden Innenflächen kleineren Krümmungsradius als die Innenflächen der Längsseiten haben. Durch die gekrümmte Ausbildung dieser Innenflächen wird verhindert, daß die durch die Durchgangsoffnung 77 geführte Zugfeder 78 nicht beschädigt werden oder sich an vorstehenden Kanten verhaken kann.

Die freien Ränder der Gelenkstücke 22, 23 sind mit etwa gleichem Krümmungsradius um Verschiedene Krümmungsmittelpunkte I, J. teilkreisförmig konvex gekrümmt und liegen in entsprechend gekrümmten Vertiefungen 79, 80 der Endstücke 90, 91 und der Hand 7.

Die eine Außenseite 81 der Längswände der Gelenkstücke 22 ist mit größerem Krümmungsradius-konvex nach außen gekrümmt als die andere Außenseite 82, die eine mittlere Längsrille 83 aufweist. Die Längsränder 84, 85 der Gelenkstücke 22 bilden mit ihren Außenflächen Gelenkflächen des Armgelenkes, denen ent-Sprechende Gelenkflächen des Endstückes 90 und der Hand 7 zugeordnet sind. Die einander zugeordneten Gelenkflächen bilden jeweils ein Scharniergelenk, mit dem die Hand 7 seitlich und nach vorne und nach hinten bewegt werden kann (Fig. 13, 14). Bei der seitlichen Bewegung der Hand gleitet der obere Längsrand 84 der Gelenkstücke 22 längs der Gelenkfläche 136 des Endstückes 90 während die Gelenkflächen 85, 87 des unteren gcharniergelenkes ihre Lage zueinander beibehalten. Diese seitliche Bewegung ist dadurch begrenzt,,daß die Hand 7 mit ihrem oberen Rand 88 an einem gegenüberliegenden Rand 89 des Endstückes 90 anschlägt.

Auch beim Strecken und Beugen der Hand 7 gleitet das Gelenkstück 22 längs der Gelenkfläche 136 des Endstückes 90, wobei die maximale Streckung dadurch begrenzt ist, daß der Unterarm mit seinem unteren Rand 89 in der Längsrille 83 des Gelenkstückes 22 (Fig. 14) zur Anlage kommt. In der gestreckten Lage der Hand stützt sich der Rand 89 des Endstückes 90 an der Außenseite 81 des Gelenkstückes ab. Die Endstücke 90, 91 haben die Funktion der Speiche, die sich um die Elle dreht.

Die Hand 7·kann auch um die Gelenkfläche 85 des Zwischenstückes 22 nach der Seite und nach vorne und hinten verschwenkt werden.

Damit die Hand 7 auch noch um mindestens 180° gegenüber dem Unterarm 5 verdreht werden kann (es ist die Drehung der Speiche um die Elle dargestellt), sind wie in den Unterschenkeln 13, 14 entsprechende ringförmige Endstücke 73, 74 vorgesehen, die, wie in den Fig. 13 und 15 dargestellt, über ein Halteteil 92 drehbar mit dem Unterarm 5 verbunden sind.

Das Halteteil 92 ist als L-förmiger Stift ausgebildet, der mit einem unteren freien Ende 93 eines langen Schenkels 94 in der Öffnung 126 eines oberen Abschnittes des Endstückes 90 befestigt, vorzugsweise verschraubt oder verklebt, ist und in die mit dieser fluchtende Öffnung 95 des Unterarmes 5 ragt. Die Öffnung 95 ist auf ihrem vom Endstück 90 abgewandten Ende schulterförmig verbreitert, derart, daß ein ringförmiger Öffungsabschnitt 95a gebildet ist, der sich über einen Bogenwinkel von mehr als 180° erstreckt und axial verlaufende Anschlagflächen 97, 98 für den kurzen Schenkel 96 des Halteteiles 92 aufweist. In den die Drehbewegung der Hand 7 begrenzenden Endstellungen liegt der kurze Schenkel 98 an einer der Anschlagflächen 96, 97 an.

Die Finger 99 der Hand 7 sind so gekrümmt, daß zwischen dem Daumen 100 und der Handinnenfläche 101 ein Bleistift o.dgl. befestigt werden kann. Der Abstand zwischen dem Daumen 100 und dem Zeigefinger 102 ist so gewählt, daß zwischen diesen beiden Fingern ein Papierstück eingeklemmt werden kann (Fig. 13, 14).

Wie Fig. 17 zeigt, sind die Füße 16 mit einem etwa rechtwinklig ausgebildeten Haken 103 versehen, der etwa in halber Länge des Fußes in einer zugehörißen Öffnung befestigt, wie beispielsweise verschraubt oder verklebt, ist. Der über den Fuß nach unten ragende freie Hakenteil 104 ist etwa s-förmig gekrümmt, wodurch seine federnde Klemmkraft beim Einstecken in eine zugehörige Öffnung 105 des plattenartigen Trägers 106 vergrößert wird.

Der Träger 106 ist als Lochblech mit den schlitzförmigen Öffnungen 105 ausgebildet und dient zum Befestigen der Gliederfigur in ihrer jeweiligen Lage, wozu die beiden Füße 15, 16 mit ihren Haken 103 in eine zugehörige Öffnung 105 unter Klemmung federnd eingesteckt werden. Auf dem Träger hat die Gliederfigur in jeder beliebigen Stellung eine hohe Standfestigkeit, so daß sie selbst beim Hin- und Herschieben des Trägers ihre Lage nicht verändert.

Anstelle der Haken 103 können auch im Fuß Schrauben oder Nägel oder ähnliche Sicherungsteile mit einem über die Fußsohle ragenden Kopf befestigt werden, wenn die Löcher des Trägers schlüssellochförmig ausgebildet sind. In diesem Fall werden die Sicherungsteile mit ihren Köpfen in den größeren Schlüssellochabschnitt eingesetzt und zur Rastverbinduß der Füße 15, 16 auf dem Träger 106 so verschoben, daß der Schraubenschaft im länglichen Schlüssellochabschnitt liegt. Auf diese Weise kann ebenfalls eine hohe Standfestigkeit und eine sehr sichere Verbindung der Füsse mit dem Träger erreicht werden.

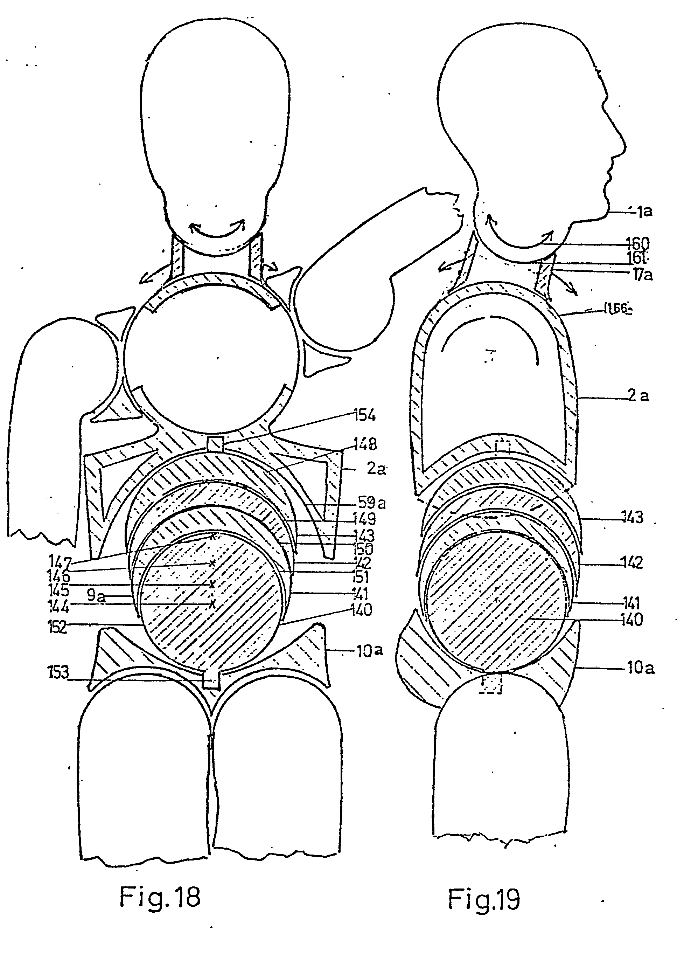

Die Gliederfiguren nach den Fig. 18, 19 und 20, 21 unterscheiden sich von der beschriebenen Ausführungsform durch eine andere Ausbildung des Bauches.

Wie die Fig. 18 und 19 zeigen, ist der Bauch 9a durch mehrere Gelenkstücke 140 bis 143 gebildet. Diese weisen jeweils verschiedene Krümmungsmittelpunkte 144 bis 147 auf, um die sie gegeneinander und gegenüber dem Becken 10a und dem Brustkorb 2a dreh- und schwenkbar sind. Die Gelenkstücke 140 bis 143 bestehen aus einer Kugel und drei Kugelabschnitten, die jeweils aufeinander angeordnet sind.

Der oberste Kugelabschnitt 143 liegt mit seiner stärker gekrümmten Oberseite 148 an der Oberfläche der Vertiefung 59a des Brustkorbs 2a an. Dieser Kugelabschnitt 143 umgreift mit seiner etwas stärker gekrümmten konkaven Unterseite 149 den mittleren Kugelabschnitt 142 im wesentlichen formschlüssig. Dieser sitzt mit seiner konkaven Unterseite 150 wiederum etwa formschlüssig auf dem unteren Kugelabschnitt 141, dessen konkave Unterseite 151 die Kugel 140 umgreift. Die Kugel 140 liegt über mehr als ihre halbe Höhe ebenfalls formschlüssig im zugehörigen Kugelabschnitt 141, so daß sie sicher mit dem Kugelabschnitt 141 verbunden ist. Die Dicke der Kugelabschnitte 141 bis 143 ist jeweils etwa gleich groß. Die Kugel 140 und der obere Kugelabschnitt 143 sind mit einem radial über ihre Oberseite 148 bzw. 152 ragenden Steg 153, 154 in zugehörige Nuten des Beckens 10a und des Brustkorbs 2a gegen Verdrehen gesichert.

Die Krümmungsmittelpunkte 145 bis 147, um die die Kugelabschnitte 142 bis 144 nach vorne, nach hinten und nach rechts und links schwenkbar sind, liegen in der Längsmittelebene der Gliederfigur und mit jeweils geringfügig größerem Abstand übereinander und über dem Krümmungsmittelpunkt 144 der Kugel 140.

Wie die Fig. 18 und 19 weiter zeigen, ist der Hals 17a dieser Gliederfigur durch ein etwa rohrförmiges Gelenkstück gebildet, in dem der Kopf 1a mit einem unteren, etwa halbkugelförmigen Endstück 160 sitzt. Die Kugelfläche 161 des Endstückes 160 bildet eine Gelenkfläche, mit der der Kopf la im Gelenkstück 17a dreh- und schwenkbar angeordnet ist. Das rohrförmige Gelenkstück 17a sitzt dreh-'und schwenkbar auf einem etwa kugelförmigen oberen Teil 166 des Brustkorbs 2a.

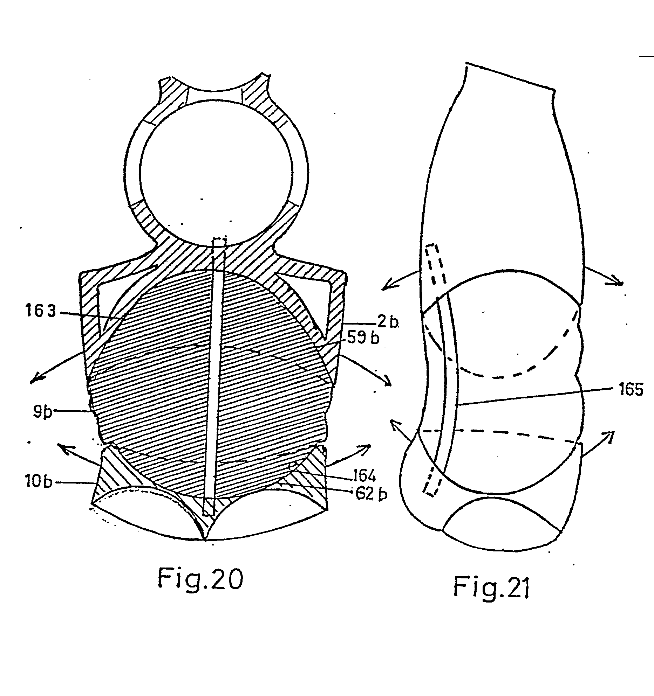

Bei der Ausführungsform nach den Fig. 20 und 21 ist der Bauch 9b durch ein Kunststoffschäumteil gebildet, das an den konkaven Flächen 163 und 164 der Vertiefung 59b und 62b des Brustkorbs 2b und des Beckens 10b durch Kleben befestigt ist. Die Dehn- und Streckarbeit des Brustkorbs 2b gegenüber dem Becken 10b werden durch die Elastizität des Bauches 3b gewährleistet. Ein biegbarer, gekrümmter Metalldraht 165 übernimmt die Funktion der menschlichen Wirbelsäule und hält den Bauch 9b in der jeweiligen Streckung und Drückung fest.

Bei beiden Ausführungsformen ist eine zusätzliche Gelenkigkeit im Bauchbereich erreicht, so daß mit diesen Gliederfiguren eine noch bessere Nachahmung der menschlichen Bewegungen gewährleistet ist.

## Patentansprüche

1. Als Gliederfigur ausgebildetes Modell für künstlerische und ergonomische Zwecke, bei dem einander zugeordnete bewegliche Gliedteile, wie Kopf, Ober- Unterarm, Bauch, Becken, Ober- und Unterschenkel, Hände und Füße jeweils dreh-und schwenkbar über Gelenke miteinander verbunden sind, deren eine Gelenkfläche durch einen Teil einer Außenseite eines Gelenkstückes und deren andere Gelenkfläche durch einen Teil einer Außenseite der miteinander verbundenen Gliedteile gebildet sind, dadurch gekennzeichnet, daß einige der Gelenkstücke (9, 10, 17, 18, 19, 22, 23) jeweils zwei einander gegenüberliegende Gelenkflächen (62, 63, 64, 28, 29, 54, 55, 56, 57, 84, 85) mit unterschiedlichen Krümmungsmittelpunkten (A bis J) aufweisen, und daß die Gelenkstücke gegenüber beiden zugehörigen Gliedteilen um die jeweiligen Krümmungsmittelpunkte schwenkbar sind.

2. Gliederfigur nach Anspruch 1, dadurch gekennzeichnet, daß zwischen den einander gegenüberliegenden Gelenkflächen (28, 29; 84, 85) mindestens eine Einschnürung (32, 83) vorgesehen ist, die eine Anschlagfläche für eines der zugehörigen Gliedteile (1, 7, 90) hat und die vorzugsweise durch eine Umfangsnut des Gelenkstückes (17, 22) gebildet ist. (Fig 3, 13).

3. Gliederfigur nach Anspruch 1 oder 2, dadurch gekennzeichnet, daß die Krümmungsmittelpunkte (A, B) der Gelenkflächen (28, 29) quer zur Längsrichtung des Gelenkstückes versetzt, vorzugsweise mit geringem Abstand von den benachbarten Seitenwänden des Gelenkstückes (17), liegen (Fig. 3 bis 5).

4. Gliederfigur nach einem der Ansprüche 1 bis 3, dadurch gekennzeichnet, daß die Gelenkstücke (9, I0, 17, 18, 19; 22, 23) etwa eiförmig oder mit etwa rechteckigem Umriß und teilkreisförmig abgerundeten Längsrändern (84, 85) oder ringförmig ausgebildet sind.

5. Gliederfigur nach einem der Ansprüche 1 bis 4, dadurch gekennzeichnet, daß die Gelenkflächen (54, 55, 56, 57; 62, 63, 64) unterschiedlichen Krümmungsradius (C, D) haben (Fig. 10).

6. Gliederfigur nach Anspruch 4, dadurch gekennzeichnet, daß der einen konvex gekrümmten Gelenkfläche des Bauches (9) eine mit größerem Krümmungsradius konkav gekrümmte Gelenkfläche des Beckens (10) zugeordnet ist.

7. Gliederfigur nach einem der Ansprüche 1 bis 6, dadurch gekennzeichnet, daß das Becken (10) zwei weitere mit etwa halb so kleinem Krümmungsradius gekrümmte konkave Gelenkflächen (63, 64) für zugehörige, etwa kalottenförmig abgerundete Enden (65, 66) der Oberschenkel (11, 12) aufweist.

8. Gliederfigur nach einem der Ansprüche 1 bis 7, dadurch gekennzeichnet, daß die einander zugeordneten Gelenkflächen (59, 62, 63) des Brustkorbes (2), des Bauches (9), des Beckens (10) und der Oberschenkel (11, 12) magnetisch ausgebildet sind.

9. Gliederfigur nach einem der Ansprüche 1 bis 8, dadurch gekennzeichnet, daß den Gelenkstücken (22, 23; 26, 27) der Hände (7, 8) und der Füße (15, 16) Endstücke (90, 91; 73, 74) zugeordnet sind, die drehbar mit den zugehörigen Gliederteilen (Unterarme 5, 6 bzw. Unterschenkel 13, 14) verbunden sind und daß die Endstücke (90, 91; 73, 74) mit den zugehörigen Gliedteilen (5, 6; 13, 14) über ein Halteteil (92), vorzugsweise einen Stift, verbunden sind, der mit einem Schenkel (94) in einer zugehörigen teilkreisförmigen Schulter einer Öffnung (95a) der Gliedteile anschlagbegrenzt ist.

10. Gliederfigur nach einem der Ansprüche 1 bis 9, dadurch gekennzeichnet, daß die Füße (15, 16) Befestigungsteile, vorzugsweise Haken (103) aufweisen, die in zugehörige Öffnungen (l05) eines plattenartigen Trägers (106), vorzugsweise eines Lochbleches, klemmend befestigbar sind.

11. Gliederfigur nach einem der Ansprüche 1 bis 10, dadurch gekennzeichnet, daß der Bauch (9a, 9b) biegbar ausgebildet ist.

12. Gliederfigur nach Anspruch 11, daurch gekennzeichnet, daß der Bäuch (9a) aus mindestens zwei Gelenkstücken (140 bis 143) besteht, die durch mindestens eine Kugel und einen auf dieser angeordneten Kugelabschnitt, vorzugsweise drei übereinander angeordnete Kugelabschnitte (141 bis 143) mit jeweils unterschiedlichem Krümmungsmittelpunkt (144 bis 147), gebildet sind.

13. Gliederfigur nach einem der Ansprüche 1 bis 11, dadurch gekennzeichnet, daß der Bauch (9b) vorzugsweise aus einem Kunststoffschaumteil elastisch ausgebildet ist und zur Bildung einer Wirbersäule einen gekrümmten Stab, vorzugsweise einen gekrümmten Metalldraht, enthält.


**Claim**

1. Model in the form of a dummy for artistic and ergonomic purposes, in which matched, movable body parts, such as head, upper arm, lower arm, abdomen, pelvis, thighs, lower legs, hands and feet, are each rotatably and swivellably connected to each other by Joints, one joint surface of which is formed by a part of an outside of a joint piece and the other joint surface of which is formed by a part of an outside of the connected body parts, wherein some of the joint pieces (9, 10, 17, 18, 19, 22, 23) each comprise two opposite joint surfaces (62, 63, 64, 28, 29, 54, 55, 56, 57, 84, 85) with different centres of curvature (A to J), and wherein the joint pieces are swivellable about the respective centres of curvature in relation to both matching body parts.

2. Dummy according to claim 1, characterized in that between the opposite joint surfaces (28,29;84,85) is at least one contraction (32,83) which has a stop face for one of the matching body parts (1,7,90) and which is formed preferably by a circumferential groove of the joint pieces (17,22) Fig.3,13).

3. Dummy according to claim 1 or 2, characterized in that the centres of curvature (A,B) of the joint surfaces (28,29) are offset tranversely to the longitudinal direction of the joint pieces, preferably at a small distance from the neighbouring side walls of the joint piece (17) (Fig. 3 to 5).

4. Dummy according to any one of claims 1 to 3, characterized in that the joint pieces (9,10,17,18, 19;22,23) are approximately oval or of approximately rectangular outline with partial-circularly roundedoff longitudinal edges (84,85) or are annular.

5. Dummy according to any one of claims 1 to 4, characterized in that the joint surfaces (54,55,56, 57;62,63,64) are of different radii of curvature (C,D) Fig.10).

6. Dummy according to claim 4, characterized in that one convexly curved joint surface of the abdomen (9) is matched with another joint surface of the pelvis (10), said other joint surface being concavely curved with a greater radius of curvature.

7. Dummy according to any one of claims 1 to 6, characterized in that the pelvis (10) comprises two futher concave joint surfaces (63,64), curved with approximately halve as small a radius of curvature, for matching ends (65,66) of the thighs (11,12), said ends being rounded off approximately in the shape of spherical caps.

8. Dummy according to any one of claims 1 to 7, characterized in that the matching joint surfaces (59,62,63) of he thorax (2), of the abdomen (9), of the pelvis (10) and of the thighs (11,12) are of magnetic design.

9. Dummy according to any one of claims 1 to 8, characterized in that the joint pieces (22,23;26,27) of the hands (7,8) and of the feet (15,16) are assigned end-pieces (90,91;73,74) which are rotatably connected to the matching body parts (lower arms 5,6 and lower legs 13,14, respectively), and wherein the end-pieces (90,91;73,74) are connected to the matching body parts (5,6;13,14) by a holding part (92) preferably a pin, which is stop-limited with a leg (94) in a matching partial-circular shoulder of an opening (95a) of the body parts.

10. Dummy according to any one of claims 1 to 9, characterized in that the feet (15,16) comprise fastening parts, preferably hooks (103), which are clampingly fastenable in matching openings (105) of a plate-type carrier (106), preferably a perforated plate.

11. Dummy according to any one of claims 1 to 10, characterized in that the abdomen (9a,9b) is of bendable design.

12. Dummy according to claim 11, characterized in that the abdomen (9a) consists of at least two joint pieces (140 to 143) which are formed by at least one ball and a ball of section disposed on the latter, preferably by three ball sections (141 to 143) disposed one on the top of the other and each having a different centre of curvature (144 to 147).

13. Dummy according to any one of claims 1 to 11, characterized in that the abdomen (9b) is elastically formed preferably from a plasticfoam part and contains a curved rod, preferably a curved metal wire, to form a backbone.

**Revendications:**

1. Modèle présenté sous forme de mannequin servant à des fins artistiques et ergonomiques, sur lequel les parties articulées, mobiles, telles que la tête, l'avant-bras et la partie supérieure du bras, le ventre, le bassin, la jambe et la cuisse, les mains et les pieds, sont reliées entre elles par l'intermédiaire d'articulations leur permettant de tourner et de pivoter, dont l'une des surfaces articulées est formée par une partie d'une face extérieure d'une pièce articulées et dont l'autre est formée par une partie d'une face extérieure des parties articulées, reliées entre elles, caractérisé par le fait que quelques pièces articulées (9, 10, 17, 18, 19, 22, 23) présentent respectivement deux surfaces articulées opposées (62, 63, 64, 28, 29, 54, 55, 56, 57, 84, 85) avec différents centres de courbure (de A à J) et par le fait que les pièces articulées faisant face aux deux parties articulées correspondantes sont orientables autour de leurs centres de courbure respectifs.

2. Mannequin selon la revendication 1, caractérisé par le fait qu'entre les deux surfaces articulées opposées (28, 29; 84, 85), est prévu au moins un étranglement (32, 83) qui présente une butée pour l'une des surfaces articulées correspondantes (1, 7, 90) et qui est formée, de préférence, par une rainure périphérique de la pièce articulée (17, 22) (fig. 3 13).

3. Mannequin selon la revendication 1 ou 2, caractérisé par le fait que les centres de courbure (A, B) des pièces articulées (28, 29) sont orientés transversalement au sens longitudinal de la pièce articulée, de préférence à faible distance des parois latérales adjacentes de la pièce articulée (17) (fig. 3 à 5).

4. Mannequin selon l'une des revendications 1 à 3, caractérisé par le fait que les pièces articulées (9, 10, 17, 18, 19; 22, 23) sont approximativement ovoïdes, présentent un contour à peu près rectangulaire et des bords longitudinaux (84, 85) arrondis, semi-circulaires, ou sont annulaires.

5. Mannequin selon l'une des revendications 1 à 4, caractérisé par le fait que les surfaces articulées (54, 55, 56, 57; 62, 63, 64) présentent un rayon de courbure différent (C, D) (fig. 10).

6. Mannequin selon la revendication 4, caractérisé par le fait qu'une surface articulée du bassin (10), concave, présentant un rayon de courbure plus important, correspond à une surface articulée, convexe, du ventre (9).

7. Mannequin selon l'une des revendications 1 à 6, caractérisé par le fait que le bassin (10) présente deux autres surfaces articulées (63, 64), concaves, dont le rayon de courbure est approximativement moitié moins important, correspondant aux extrémités arrondies, approximativement en forme de calotte, (65, 66) de la cuisse (11, 12).

8. Mannequin selon l'une des revendications 1 à 7, caractérisée par le fait que les surfaces articulées correspondantes (59, 62, 63) de la cage thoracique (2), du ventre (9), du bassin (10) et de la cuisse (11, 12) sont magnétiques.

9. Mannequin selon l'une des revendications 1 à 8, caractérisé par le fait qu'aux pièces articulées (22, 23; 26, 27) des mains (7, 8) et des pieds (15, 16), sont combinées des extrémités (90, 91; 73, 74) qui sont reliées, par une articulation rotative, aux parties articulées correspondantes (avant-bras 5, 6 ou jambes 13, 14) et par le fait que les extrémités (90, 91; 73, 74) sont reliées aux parties articulées correspondantes (5, 6; 13, 14) par une pièce de maintien (92), de préférence une cheville, dont la butée est assurée par un support (94), situé dans un épaulement, semi-circulaire, au niveau d'une ouverture (95a) des pièces articulées.

10. Mannequin selon l'une des revendications 1 à 9, caractérisé par le fait que les pieds (15, 16) présentent des pièces de fixation, de préférence des crochets (103), qui peuvent être bloqués dans les ouvertures correspondantes (105) d'un support plat (106), de préférence de la tôle perforée.

11. Mannequin selon l'une des revendications 1 à 10, caractérisé par le fait que le ventre (9a, 9b) est flexible.

12. Mannequin selon la revendication 11, caractérisé par le fait que le ventre (9a) comprend au moins deux pièces articulées (140 à 143) qui sont formées d'au moins une sphère et d'un segment sphérique, placé sur cette dernière, de préférence de trois segments sphériques superposés (141 à 143), présentant respectivement un centre de courbure différent (144 à 147).

13. Mannequin selon l'une des revendications 1 à 11, caractérisé par le fait que le ventre (9b) est formé, de préférence, d'une mousse en matière plastique, élastique, et qu'il comprend une baguette courbée, censée représenter la colonne vertébrale, de préférence un fil métallique courbé.

Fig.2     Fig.1

0 100 959

Fig.3

Fig.4

42
40
39
7
7
30
17
B
38
31
2
A
32
29
41
43
44

Fig.5

32
17
19
28
38

Fig.6

33
35
34
36
37

Fig.7

36a
33a
35a
34a
37a

Fig.8

Fig.9

Fig.10

B
A

3

Fig.11

Fig.12

Fig.13

Fig.14

Fig.15

7

Fig.16

Fig.17

Fig.18

Fig.19

Fig.20

Fig.21